# EUROPEAN PATENT APPLICATION

(11) **EP 4 782 270 A1**
(43) Date of publication of application: **29.07.2026**
(21) Application number: 26152831.9
(22) Date of filing: 20.01.2026
(51) Int. Cl.: B60N 2/02, B60N 2/07

(54) **AUTOMOBILE SEAT REINFORCED SLIDING RAIL**

(30) Priority: 23.01.2025 CN 202520156837 U
(71) Applicant: Adient (Chongqing) Automotive Components Co., Ltd., Liangjiang New Area, Chongqing 401122 (CN)
(72) Inventor: YU, Shaogao, Liangjiang New Area, Chongqing 401122 (CN); XIN, Yi, Liangjiang New Area, Chongqing 401122 (CN); CHEN, Zhiyong, Liangjiang New Area, Chongqing 401122 (CN); QIN, Jian, Liangjiang New Area, Chongqing 401122 (CN)
(74) Representative: Liedtke & Partner Patentanwälte

(57) **Abstract**

The present invention discloses an automobile seat reinforced sliding rail, comprising: a lower sliding rail (1), which has a sliding inner cavity (1a) that extends in a length direction, an upper end of the sliding inner cavity (1a) having a yielding opening (1b); an upper sliding rail (2), which is forward-backward slidably mounted in the sliding inner cavity (1a), a lower end of the upper sliding rail (2) having a mounting slot (2a) that extends in a length direction thereof, and an upper end of the mounting slot (2a) having a mounting opening (2c); a mounting support (3), which is fixedly mounted at a position of the mounting slot (2a) that corresponds to the mounting opening (2c), the mounting support (3) comprising a horizontal support plate (3a) and two vertical plates (3b) that extend upward from two ends of the horizontal support plate (3a), two sides of the two vertical plates (3b) both having a protruding part (3c) that extends outward, side walls of two sides of the mounting slot (2a) having a support hole (2b), and the protruding part (3c) being supported in the support hole (2b); a leadscrew (4), both ends of which are fixedly mounted at a front end and a back end of the sliding inner cavity (1a) by means of a support base (8), and an end part of the leadscrew (4) being screwed into the support base (8); and a gearbox (5), which is fixedly mounted on the mounting support (3) and cooperates in threaded transmission with the leadscrew (4). Beneficial effects of the present invention are: structural stability, increasing the strength of the sliding rail.

## Description

### Technical Field

The present invention relates to the technical field of automobile seat parts, in particular to an automobile seat reinforced sliding rail.

### Background Art

A sliding rail is an important mechanical component on a seat, and a common sliding rail is mainly mounted underneath the seat, used for a mechanism for adjusting a forward-backward position of the seat. An automobile seat sliding rail comprises an upper sliding rail, a lower sliding rail, a transmission mechanism and a rolling element, the upper sliding rail and a seat framework being connected to each other, the lower sliding rail and a vehicle bottom plate being connected to each other, and the transmission mechanism mainly comprising a gearbox and a leadscrew, wherein the gearbox is fixed to the upper sliding rail in a suspended manner by means of a U-shaped support, the leadscrew being fixed to the lower sliding rail in a supported manner by a support base; firstly, motive power is transmitted to the leadscrew by means of an output shaft, and the transmission mechanism in the gearbox is able to engage with the leadscrew, and hence undergo axial displacement along the leadscrew, thereby driving the upper sliding rail to undergo displacement relative to the lower sliding rail.

As consumers have ever higher requirements for the quality of automobile interior decoration, additional functional configurations have been added to automobile seats, such as a zero-gravity state and SBA, and higher requirements have been raised for the forward-backward strength of the sliding rail; existing ordinary sliding rail gearboxes mounted by means of a U-shaped support are unstable, and the support provided by a leadscrew fixing means is inadequate, unable to satisfy strength requirements.

Therefore, there is an urgent need to develop a reinforced sliding rail, to satisfy higher requirements for forward-backward movement of a seat.

### Summary of the Invention

In view of this, the present invention provides an automobile seat reinforced sliding rail, the objective of which is to solve the problem that existing ordinary sliding rails are not sufficiently strong.

To achieve the abovementioned objective, technical solutions of the present invention are as follows:
An automobile seat reinforced sliding rail, comprising: a lower sliding rail, which is used for fixing to an automobile bottom plate and has an inner cavity (also called as sliding inner cavity) that extends in a length direction, an upper end of the inner cavity having a yielding opening; an upper sliding rail, which is forward-backward slidably mounted in the inner cavity, a lower end of the upper sliding rail having a mounting slot that extends in a length direction thereof, and an upper end of the mounting slot having a mounting opening; a mounting support, which is fixedly mounted at a position of the mounting slot that corresponds to the mounting opening, the mounting support comprising a horizontal support plate and two vertical plates that extend upward from two ends of the horizontal support plate, two sides of the two vertical plates both having a protruding part that extends outward, side walls of two sides of the mounting slot having a support hole, and the protruding part being supported in the support hole; a leadscrew, both ends of which are fixedly mounted at a front end and a back end of the inner cavity by means of a support base, the support base having a threaded hole that matches the leadscrew, and an end part of the leadscrew being screwed into the threaded hole;
and a gearbox, which is fixedly mounted on the mounting support and cooperates in threaded transmission with the leadscrew.

Using the structure described above, cooperation of the protruding part and the support hole is able to increase the stability of mounting of the gearbox, and the leadscrew uses its own thread to connect to the support base by means of screwing, increasing strength, able to satisfy strength requirements for existing multifunctional automobile seats.

Preferably: upper ends of the two vertical plates both have an outwardly turned support lug, the support lug being fixed to the top of the mounting slot by means of a bolt. Using the structure described above, mounting is stable.

Preferably: upper ends of the two vertical plates are both welded to the top of the upper sliding rail. Using the structure described above, mounting is stable.

Preferably: a rubber cover covers an upper end of the gearbox, and a middle part of an upper end of the rubber cover is an arc-shaped protruding construction. Using the structure described above, debris is guided toward two sides by means of the arc-shaped protruding construction, reducing the probability of debris falling into the gearbox.

Preferably: an upper end of the support base is a rectangular construction, a lower end being wider, and the lower end of the support base being connected to the bottom of the lower sliding rail by means of two threaded fasteners. Using the structure described above, stronger support is obtained.

Preferably: a middle part of the upper sliding rail in a width direction is a rectangular structure, the bottom of the rectangular structure having cooperating parts extending toward both sides, and a clearance being provided between the cooperating part and the rectangular structure. Using the structure described above, sliding of the upper sliding rail is facilitated, and the clearance avoids the protruding part.

Preferably: a rolling assembly is provided between an outer side of the cooperating part and the sliding inner cavity. Using the structure described above, movement of the sliding rail is smoother and stabler.

Preferably: an outwardly protruding construction extends along all of a middle position of the cooperating part in a length direction, and the rolling assembly comprises balls located at an upper side and a lower side of the protruding construction, and a connecting frame that connects the balls of the upper side and the lower side, rolling cooperation being formed by the ball with both the cooperating part and the sliding inner cavity, two ends of an inner wall of the sliding inner cavity having a limiting part that protrudes outward, and the limiting part being used for limiting the ball. Using the structure described above, the protruding construction is used to mount the rolling assembly, and the structure is simple and compact, and the movement of the sliding rail smooth.

Preferably: the protruding part is a step shape, and the support hole is fitted over the step. Using the structure described above, mounting is stabler.

Preferably: the mounting opening is located at a middle position of the upper sliding rail. Using the structure described above, the structure is compact, and mounting is convenient.

The beneficial effects of the present invention compared to the prior art are:
1. With the automobile seat reinforced sliding rail provided by the present invention, a protruding part is arranged on a mounting support, and the protruding part cooperates with a support hole on a side wall of a mounting slot, which enables mounting of a gearbox to be stabler.
2. A leadscrew uses its own thread to screw into a support base, and a lower end of the support base is fixed to a lower sliding rail by means of a bolt, which increases the strength of the sliding rail.
3. A cooperating part of an upper sliding rail fits to a rolling assembly by means of a middle protruding construction, and the structure is simple and compact, and movement of the sliding rail smoother.

### Brief Description of the Drawings

Fig. 1 is a structural schematic drawing of the present invention;
Fig. 2 is a structural schematic drawing of an upper sliding rail;
Fig. 3 is a bottom view of an upper sliding rail;
Fig. 4 is a schematic drawing showing a rubber cover;
Fig. 5 is a structural schematic drawing of a mounting support that has support lugs;
Fig. 6 is a structural schematic drawing of a mounting support;
Fig. 7 is a side view of the present invention;
Fig. 8 is a schematic drawing showing a threaded fastener; and
Fig. 9 is a schematic drawing showing a rolling assembly.

### Detailed Description of Embodiments

The present invention is described further below in conjunction with embodiments and the accompanying drawings.

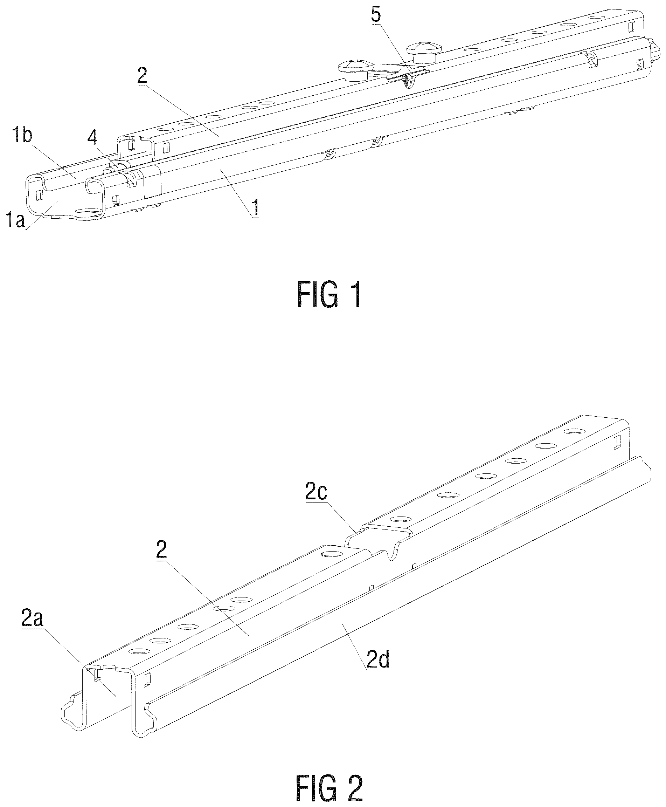

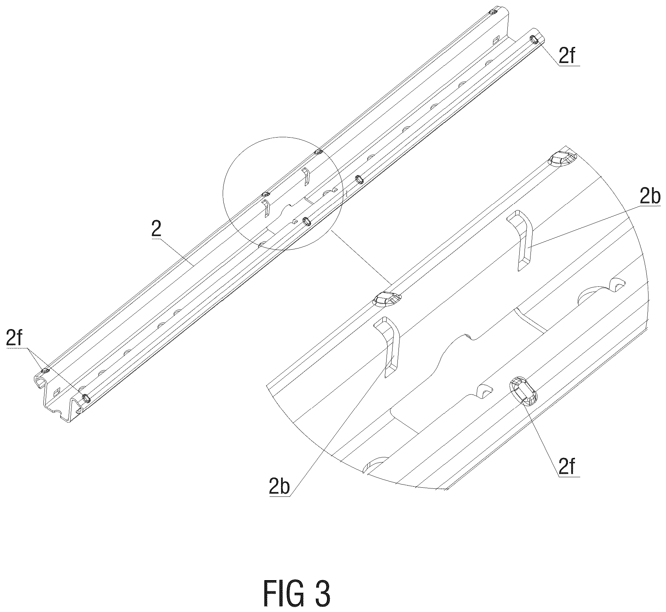

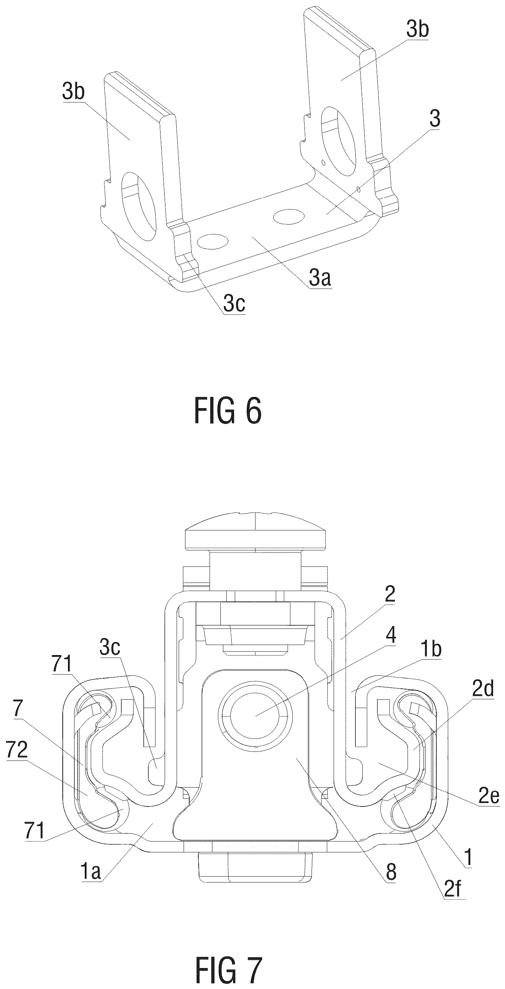

As shown in Fig. 1, an automobile seat reinforced sliding rail comprises an upper sliding rail 2 and a lower sliding rail 1, wherein the lower sliding rail 1 is used for fixing to an automobile bottom plate, and the upper sliding rail 2 is used for connecting to an automobile seat. The lower sliding rail 1 is a rectangular structure, having an inner cavity 1a (also called sliding inner cavity 1a) that extends in a length direction thereof, an upper end of the inner cavity 1a having a yielding opening 1b, and the upper sliding rail 2 is forward-backward slidably mounted in the sliding inner cavity 1a; as shown in Fig. 2, a lower end of the upper sliding rail 2 has a mounting slot 2a that extends in a length direction thereof, and a middle position of an upper end of the mounting slot 2a has a mounting opening 2c. A mounting support 3 is mounted at a position in the mounting slot 2a that corresponds to the mounting opening 2c. As shown in Fig. 6, the mounting support 3 comprises a horizontal support plate 3a and two vertical plates 3b that extend upward from two ends of the horizontal support plate 3a, two sides of the two vertical plates 3b both having a stepped protruding part 3c that extends outward; as shown in Fig. 3, side walls of two sides of the mounting slot 2a have a support hole 2b, the protruding part 3c being supported in the support hole 2b.

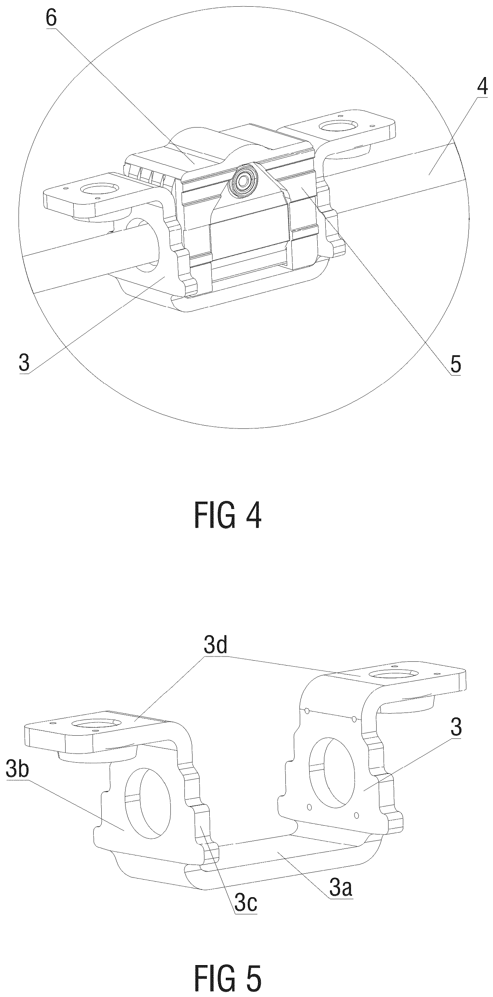

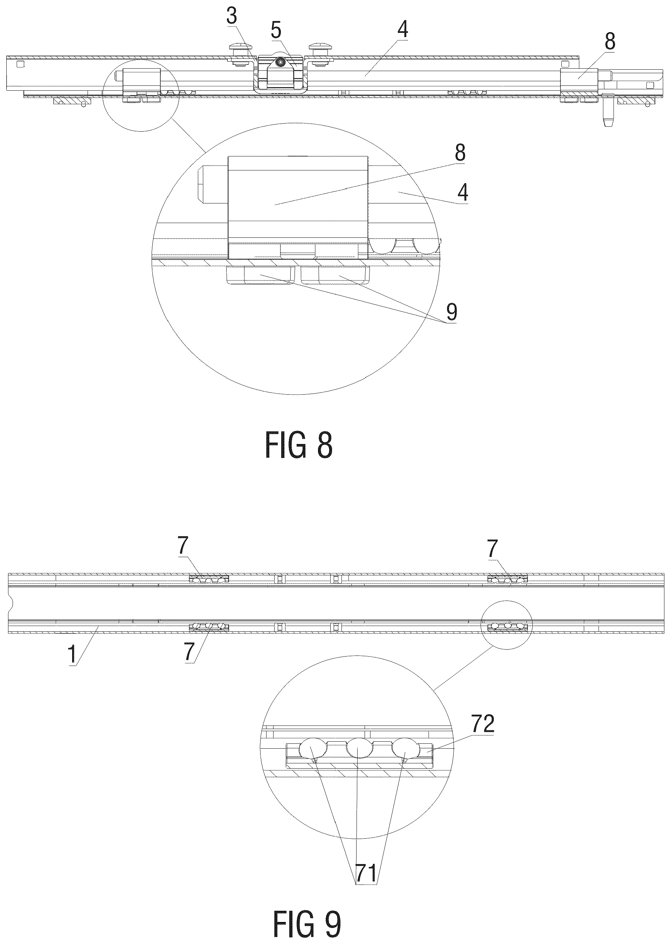

As shown in Fig. 8, a leadscrew 4 is further mounted in the sliding inner cavity 1a, both ends of the leadscrew 4 being fixedly mounted at a front end and a back end of the sliding inner cavity 1a by means of a support base 8, the support base 8 having a threaded hole that matches the leadscrew 4, the leadscrew 4 using its own thread to cooperate with the threaded hole, and an end part being screwed into the threaded hole. As shown in Fig. 7, an upper end of the support base 8 is a rectangular construction, a lower end being wider and being connected to the bottom of the lower sliding rail 1 by means of two threaded fasteners 9. As shown in Fig. 4, a gearbox 5 is fixedly mounted on the mounting support 3, and the gearbox 5 cooperates in threaded transmission with the leadscrew 4.

As shown in Figs. 4 and 5, in the present embodiment, upper ends of the vertical plates 3b of the mounting support 3 both have outwardly turned support lugs 3d, and the support lugs 3d are fixed to the top of the mounting slot 2a by means of bolts, thereby fixing the mounting support 3. A rubber cover 6 covers an upper end of the gearbox 5, to protect the gearbox 5, and a middle part of an upper end of the rubber cover 6 is an arc-shaped protruding construction, which is able to guide debris toward two sides, reducing the probability of debris falling into the gearbox 5.

As shown in Figs. 7 and 9, a middle part of the upper sliding rail 2 in a width direction is a rectangular structure, an upper end thereof passing out of the yielding opening 1b, the bottom of the lower end rectangular structure having cooperating parts 2d extending toward both sides, a clearance 2e being provided between the cooperating part 2d and the rectangular structure, and the clearance 2e being used for avoiding the protruding part 3c. An outwardly protruding construction extends along a middle position of the cooperating part 2d in a length direction, and a rolling assembly 7 is provided between the cooperating parts 2d on both sides and the sliding inner cavity 1a; the rolling assembly 7 comprises three sets of balls 71 located at an upper side and a lower side of the protruding construction, and a connecting frame 72 that connects the three sets of balls 71, wherein, in the three sets of balls 71, the ball 71 that is located at the lower side of the protruding construction is larger than the ball 71 of the upper side, which is able to provide better support. Rolling cooperation is formed by the ball 71 with both the cooperating part 2d and the sliding inner cavity 1a, and the protruding construction is able to naturally limit the balls 71 of the upper side and the lower side, preventing the balls 71 from sliding vertically. Two sides of the mounting support 3 are symmetrically provided with two sets of rolling assemblies 7, and an outwardly protruding limiting part 2f is provided between an inner wall end part of the sliding inner cavity 1a and a position near the mounting support 3, and the limiting part 2f is used for limiting the ball 71, preventing the ball 71 from rolling out of the sliding rail or colliding with the mounting frame or mounting support 3.

As shown in Figs. 7 and 8, when motive power is input to an end part of the leadscrew 4 driving the leadscrew 4 to rotate, a transmission mechanism in the gearbox 5 is able to engage in transmission with the leadscrew 4, and the gearbox 5 is fixed to the upper sliding rail 2, thereby enabling the upper sliding rail 2 to undergo axial displacement along the leadscrew 4, and the leadscrew 4 is fixed to the lower sliding rail 1, so that the upper sliding rail 2 undergoes displacement relative to the lower sliding rail 1; during this process, the rolling assembly 7 is able to provide support to the upper sliding rail 2, and moves as the upper sliding rail 2 moves, ensuring that the upper sliding rail 2 moves smoothly, and the mounting support 3 further has a protruding part 3c that cooperates with the support hole 2b, as well as an upper end connected and fixed to the upper sliding rail 2, so that mounting of the gearbox 5 on the mounting support 3 is stabler. In addition, two ends of the leadscrew 4 use their own threads to screw into the support base 8, and the support base 8 is connected to the lower sliding rail 1 by means of two threaded fasteners 9; such a connecting means is able to increase the strength of the sliding rail by a greater degree, such that the sliding rail satisfies diversified usage requirements.

Finally, it should be explained that the description above is merely of preferred embodiments of the present invention. Enlightened by the present invention, those skilled in the art could make various similar representations without violating the purpose and claims of the present patent application, and all such changes fall within the scope of protection thereof.

### List of References

- 1: lower sliding rail
- 1a: inner cavity/sliding inner cavity
- 1b: yielding opening
- 2: upper sliding rail
- 2a: mounting slot
- 2b: support hole
- 2c: mounting opening
- 2d: cooperating part
- 2e: clearance
- 2f: limiting part
- 3: mounting support
- 3a: horizontal support plate
- 3b: vertical plate
- 3c: protruding part
- 3d: support lug
- 4: leadscrew
- 5: gearbox
- 6: rubber cover
- 7: rolling assemblies
- 8: support base
- 9: threaded fastener
- 71: balls
- 72: connecting frame

## Claims

1. Automobile seat reinforced sliding rail, comprising:
- a lower sliding rail (1), which is used for fixing to an automobile bottom plate and has an inner cavity (1a) that extends in a length direction, and an upper end of the inner cavity (1a) having a yielding opening (1b);
- an upper sliding rail (2), which is forward-backward slidably mounted in the inner cavity (1a), a lower end of the upper sliding rail (2) having a mounting slot (2a) that extends in a length direction thereof, and an upper end of the mounting slot (2a) having a mounting opening (2c);
- a mounting support (3), which is fixedly mounted at a position of the mounting slot (2a) that corresponds to the mounting opening (2c), the mounting support (3) comprising a horizontal support plate (3a) and two vertical plates (3b) that extend upward from two ends of the horizontal support plate (3a), two sides of the two vertical plates (3b) both having a protruding part (3c) that extends outward, side walls of two sides of the mounting slot (2a) having a support hole (2b), and the protruding part (3c) being supported in the support hole (2b);
- a leadscrew (4), both ends of which are fixedly mounted at a front end and a back end of the inner cavity (1a) by means of a support base (8), the support base (8) having a threaded hole that matches the leadscrew (4), and an end part of the leadscrew (4) being screwed into the threaded hole;
and a gearbox (5), which is fixedly mounted on the mounting support (3) and cooperates in threaded transmission with the leadscrew (4).

2. Automobile seat reinforced sliding rail according to claim 1, **characterized in that**: upper ends of the two vertical plates (3b) both have an outwardly turned support lug (3d), the support lug (3d) being fixed to the top of the mounting slot (2a) by means of a bolt.

3. Automobile seat reinforced sliding rail according to claim 1 or 2, **characterized in that**: upper ends of the two vertical plates (3b) are both welded to the top of the upper sliding rail (2).

4. Automobile seat reinforced sliding rail according to one of the preceding claims, **characterized in that**: a rubber cover (6) covers an upper end of the gearbox (5), and a middle part of an upper end of the rubber cover (6) is an arc-shaped protruding construction.

5. Automobile seat reinforced sliding rail according to one of the preceding claims, **characterized in that**: an upper end of the support base (8) is a rectangular construction, a lower end being wider, and the lower end of the support base (8) being connected to a bottom of the lower sliding rail (1) by means of two threaded fasteners (9).

6. Automobile seat reinforced sliding rail according to one of the preceding claims, **characterized in that**: a middle part of the upper sliding rail (2) in a width direction is a rectangular structure, a bottom of the rectangular structure having cooperating parts (2d) extending toward both sides, and a clearance (2e) being provided between each of the cooperating parts (2d) and the rectangular structure.

7. Automobile seat reinforced sliding rail according to claim 6, **characterized in that**: a rolling assembly (7) is provided between an outer side of each of the cooperating parts (2d) and the inner cavity (1a).

8. Automobile seat reinforced sliding rail according to claim 7, **characterized in that**: an outwardly protruding construction extends along all of a middle position of the cooperating part (2d) in a length direction, and the rolling assembly (7) comprises balls (71) located at an upper side and a lower side of the protruding construction, and a connecting frame (72) that connects the balls (71) of the upper side and the lower side, rolling cooperation being formed by the ball (71) with both the cooperating part (2d) and the sliding inner cavity (1a), two ends of an inner wall of the sliding inner cavity (1a) having a limiting part (2f) that protrudes outward, and the limiting part (2f) being used for limiting the ball (71).

9. Automobile seat reinforced sliding rail according to one of the preceding claims, **characterized in that**: the protruding part (3c) is a step shape, and the support hole (2b) is fitted over the step.

10. Automobile seat reinforced sliding rail according to one of the preceding claims, **characterized in that**: the mounting opening (2c) is located at a middle position of the upper sliding rail (2).
